# EUROPEAN PATENT APPLICATION

(11) **EP 3 838 023 A1**
(43) Date of publication of application: **23.06.2021**
(21) Application number: 19218482.8
(22) Date of filing: 20.12.2019
(51) Int. Cl.: A24F 40/53, A24F 40/65, H04M 1/725, G06F 8/65

(54) **A SYSTEM AND METHOD FOR MANAGING A SMOKING SUBSTITUTE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A smoking substitute device is configured to be disabled until an updated firmware is installed on the device. Advantageously, by disabling the smoking substitute device, it can be ensured that the device is not used without a safety or otherwise critical firmware update from being installed. A system including the smoking substitute device and a method of managing the smoking substitute device is provided wherein once a disable command is received by the device, an aerosol component assembly is disabled and the aerosol component assembly remains disabled until an updated firmware is installed on the device. The smoking substitute device is connected to an external device that receives the updated firmware and upon receiving the updated firmware, the external devices transmits to the smoking substitute device the disable command before transmitting the updated firmware. Typically the process will be controlled via an application running on the external device and the application may provide the user control over when the firmware update is installed. Advantageously, by first transmitting a disable command, the smoking substitute device can be prevented from being used to produce an aerosol until the safety or otherwise critical firmware update is complete.

## Description

### TECHNICAL FIELD

The present invention relates to a smoking substitute device and particularly, although not exclusively, to the management of firmware updates when the smoking substitute device is connected to an external device.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

If the smoking substitute device does not operate in isolation to other devices, it would be advantageous to allow the device's firmware to be optionally updated to ensure safety or otherwise critical firmware updates are completed.

The present invention has been devised in light of the above considerations.

### Summary of the Invention

According to exemplary aspects, a smoking substitute device is configured to be disabled until an updated firmware is installed on the device. Advantageously, by disabling the smoking substitute device, it can be ensured that the device is not used without a safety or otherwise critical firmware update being installed.

At their most general, the exemplary aspects provide a smoking substitute device, a system including the smoking substitute device and a method of managing the smoking substitute device wherein once a disable command is received by the device, an aerosol component assembly is disabled and the aerosol component assembly remains disabled until an updated firmware is installed on the device. In the exemplary aspects of the system, the smoking substitute device is connected to an external device that receives the updated firmware and upon receiving the updated firmware, the external device transmits to the smoking substitute device the disable command before transmitting the updated firmware. Thus the smoking substitute device receives the updated firmware. Typically the process will be controlled via an application running on the external device and the application may provide the user control over when the firmware update is installed. Advantageously, by first transmitting a disable command, the smoking substitute device can be prevented from being used to produce an aerosol until the safety or otherwise critical firmware update is complete.

There is therefore provided, according to a first exemplary aspect, a smoking substitute device comprising a memory component, a communication interface component, a control unit component, and an aerosol assembly component.

In exemplary embodiments, the memory component, communication component, control unit component and aerosol assembly component are suitably housed in a body. Yet further, in exemplary embodiments, typically a power source is provided to power the components. Suitably, the power source may be a battery and preferably a rechargeable battery. Moreover, preferably the power source is housed in the body.

In the exemplary embodiments, the memory component stores firmware. Firmware is data that is used to control operation of the smoking substitute device. For instance, the control unit component uses the firmware to dictate how the components are controlled. Firmware updates can be installed by storing updated firmware data in the memory or by overwriting all or parts of previously installed firmware. Once installed, the controller uses the updated firmware to guide control of the components. It will be appreciated that a developer can release updated firmware to fix operational bugs or errors or to provide new or enhanced operational features through the software changes. Here, a receiving device receives the updated firmware from a remote server. In one exemplary embodiment, the receiving device is configured to automatically transmit a disable command on receiving the firmware update. Alternatively, the receiving device may be configured to read a header or the like of the updated firmware for the presence or absence of a critical tag identifier, wherein the disable command is not sent if the updated firmware is identified as non-critical. Advantageously, by providing the developer the choice to assign a critical tag to the updated firmware such that critical updates are forced on the smoking substitute device, for non-critical updates the firmware developer can opt to assign a non-critical tag to the update such that the external device is not controlled to send the disable command such that the smoking substitute device remains operational even if the updated firmware is not installed.

The communication interface component is configured to receive data and commands from an external device. Suitably, the external device may be a smartphone, tablet, smartwatch or other suitable device. The control unit may complete a pairing operation to pair the smoking substitute device and external device or to otherwise verify the external device as a trusted external device that the smoking substitute device is authorised to receive transmissions from. In exemplary embodiments, the external device receives firmware updates from a remote server. Upon receiving a firmware update the external device is configured to transmit a disable command to the communication interface component of the smoking substitute device. Here, after transmitting the disable command, the external device transmits the updated firmware to the communication interface component of the smoking substitute device. In some exemplary embodiments, after transmitting the disable command, the external device may require a user input before transmitting the updated firmware. Typically, the external device suitably operates an application to control the communication with the smoking substitute device and to display the information to the user.

The control unit component executes the firmware stored in the memory to control the memory and communication interface. For instance, the control unit component controls the storage of the updated firmware data in the memory and the receipt by the communication interface component of transmissions from the external device. Upon receiving a disable command via the communication interface component, the control unit is configured to disable operation of the aerosol assembly component such that the smoking substitute device does not produce an aerosol even when manipulated to do so by a user.

The power source, for instance a battery, provides power to the components of the smoking substitute device. Suitably the battery and components are housed in a body of the smoking substitute device.

In the exemplary embodiments, the aerosol assembly component is operable to produce an aerosol. Suitably, the control unit may prevent power from being supplied to the aerosol assembly component to disable the operation thereof. For instance, by preventing or controlling the power source from supplying power to the aerosol assembly component. In one exemplary embodiment, the aerosol assembly component includes a heating unit and the assembly is disabled by preventing power from being supplied to the heating unit. In an alternative or complimentary exemplary embodiment, the aerosol assembly component includes a heating unit and a heating unit activator, wherein the heating unit is activated to heat a consumable via the heating unit activator. Here the control unit can disable the aerosol assembly component by preventing power from being supplied to the heating unit activator. A suitable heating unit activator may be a switch that is manually activated or alternatively an airflow sensor that detects airflow through the body and is activated by inhaling from the smoking substitute device.

In a further exemplary embodiment, the aerosol assembly component comprises a coupling portion arranged to receive a consumable and an electrical interface for electrically coupling the consumable to the coupling portion. Suitably, the coupling portion may be a portion of a body housing the components. Here, the control unit component disables the aerosol assembly component by preventing power from being supplied to the electrical interface.

Preferably, in the exemplary embodiments, the communication interface component is a wireless communication interface. Here the connection between the smoking substitute device and the external device is a wireless connection and the updated firmware is an Over-the-Air update. Typically, the updated firmware is transmitted from a remote server to the smoking substitute device via an intermediary external device. However, it will be appreciated that the smoking substitute device could be adapted to receive the updated firmware directly from the remote server. Here, the remote server would act as the remote device and first transmit the disable command. Alternatively, the smoking substitute device may receive the updated firmware direct from the remote network. Here the smoking substitute device generates the disable command on receiving the updated firmware and the control unit disables the aerosol assembly component as part of generating the disable command. Where an intermediary device is used, the exemplary embodiments include re-attempting to send the disable command should the wireless communication with the smoking substitute device not be connected. For instance upon reconnection of the wireless communication, the disable command is re-transmitted to the wireless interface of the smoking substitute device.

There is therefore provided, according to a further exemplary aspect, a system including the smoking substitute device of the above exemplary embodiments and an external device. Typically the external device runs an application to control the interface between the user and the smoking substitute device. The external device receives updated firmware from a remote server. After receiving the updated firmware, the external device transmits a disable signal to the smoking substitute device. After transmitting the disable signal, the external device transmits the updated firmware to the smoking substitute device. In one exemplary embodiment, after transmitting the disable signal, a user input is required before the external device transmits the updated firmware. In a further exemplary embodiment, the external device reads a critical tag from an updated firmware and does not transmit the disable command if the critical tag is not present. This allows a developer to issue non critical firmware updates that a user can opt to install without the smoking substitute device being disabled prior to the updated firmware installation.

According to a further exemplary aspect there is therefore provided a method of managing a smoking substitute device according to the above aspects. The method comprises the step of receiving a disable command via a communication interface component of the smoking substitute device. After receiving the disable command, the method comprises the step of disabling the aerosol assembly component. The method further comprises the step of re-enabling the aerosol assembly component only after the updated firmware has been installed on the smoking substitute device. Here, suitably, the control unit running the updated firmware from the memory is configured to re-enable the aerosol assembly component. According to exemplary embodiments the method includes managing a system further including an external device. Here the method includes the steps of receiving an updated firmware from a remote server. On receiving the updated firmware the method comprises the step of transmitting a disable command to a communication interface component of the smoking substitute device.

In one exemplary embodiment the updated firmware may include a critical tag and the external device may read the critical tag and send a disable command upon determining that the updated firmware includes a critical tag.

According to further exemplary aspects there is provided a computer implemented method for managing a smoking substitute device to execute the previous method aspect or a computer-readable medium containing computer-readable instructions which, when executed by a processor, cause the processor to perform the precious method aspect.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device;
**Figure 2(a)** shows an example smoking substitute device for use as the smoking substitute device in the system of Fig. 1;
**Figure 2(b)** shows the main body of the smoking substitute device of Fig. 2(a) without the consumable;
**Figure 2(c)** shows the consumable of the smoking substitute device of Fig. 2(a) without the main body;
**Figure 3(a)** is a schematic view of the main body of the smoking substitute device of Fig. 2(a);
**Figure 3(b)** is a schematic view of the consumable of the smoking substitute device of Fig. 2(a);
**Figure 4** is an example schematic view of a system for disabling a smoking substitute device before an updated firmware is loaded;
**Figure 5** is a flow chart of a method of disabling a smoking substitute device before an updated firmware is loaded; and
**Figure 6** is a flow chart of a method of managing a system and disabling a smoking substitute device before an updated firmware is loaded.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

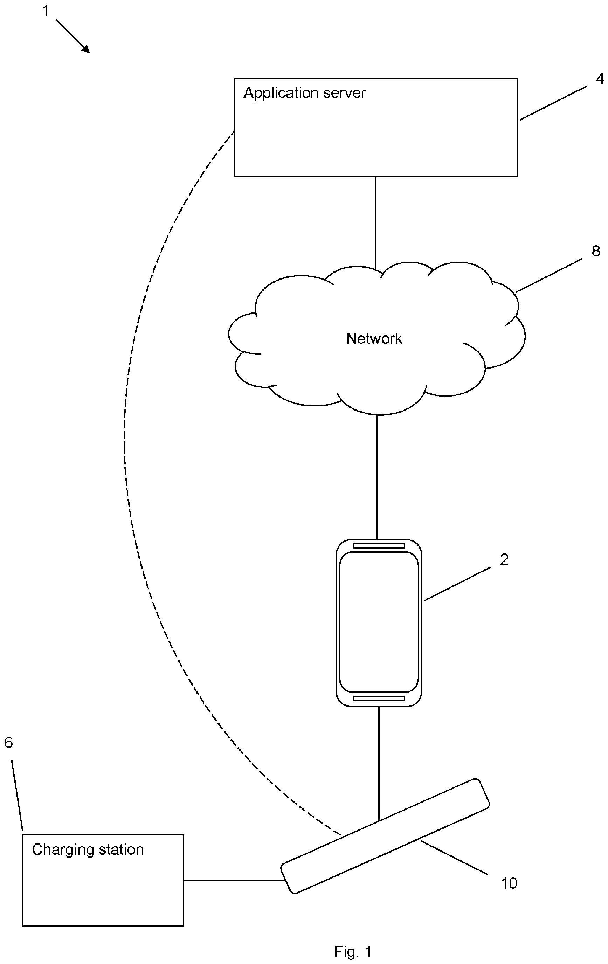

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

In other examples, the smoking substitute device 10 may be configured to communicate with the application server 4 via a connection that does not involve the mobile device 2, e.g. via a narrowband internet of things ("NB-IoT") connection. In some examples, the mobile device 2 may be omitted from the system.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4. The app may run in the background to handle communication with the smoking substitute device.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

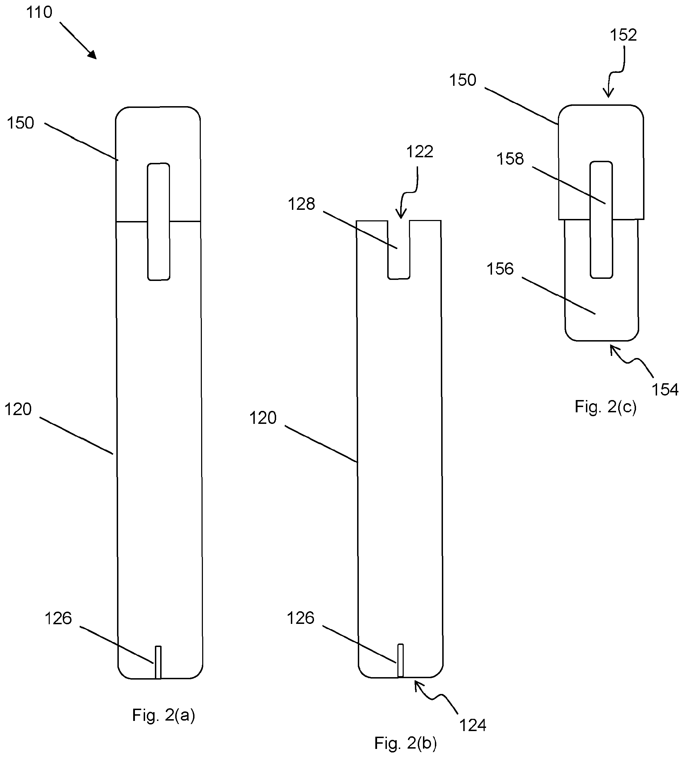

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

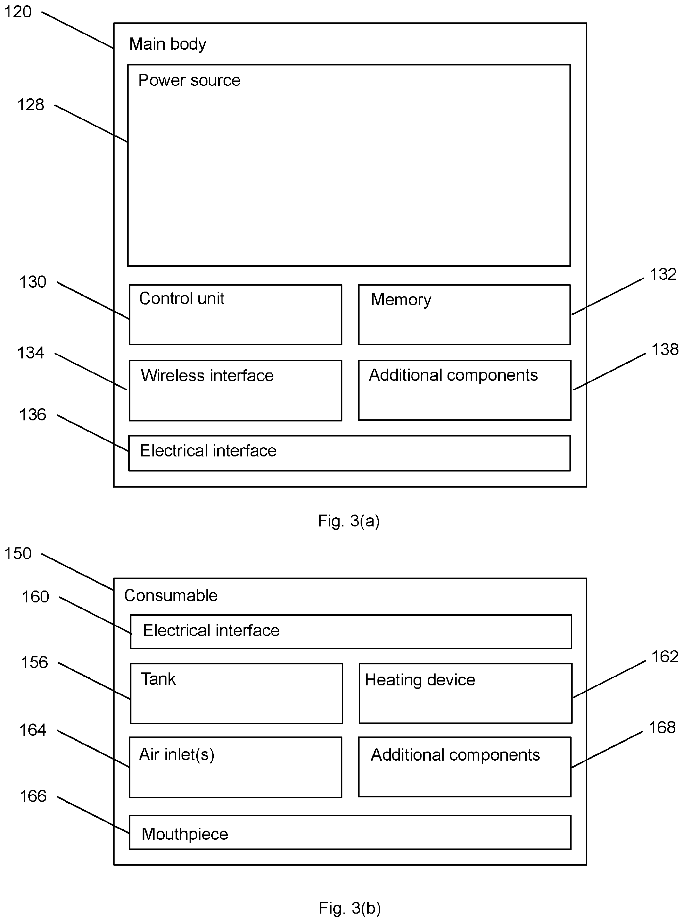

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface establishes communication over a wireless communication channel between the smoking substitute device and communication terminal of the external device. The wireless interface may utilities any suitable wireless protocol. Suitably, the wireless interface may operate over a short range network. For example, it may comprise a wireless personal area network (WPAN), e.g. using Bluetooth™, ZigBee, a WiFi personal hotspot or the like. The smoking substitute device may pair with the portable communication terminal over the wireless communication channel. The portable communication terminal may be a master device and the smoking substitute device may be a slave device. As such, in exemplary embodiments, the wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical supply contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reading device configured to read information associated with the consumable from a machine readable data source included in (e.g. contained in the body of, or attached to) the consumable 150.

In some examples, the reading device (if present) may be configured to read information from the machine readable data source non-wirelessly, e.g. using an electrical connection between the main body 120 and consumable 150.

For example, the reading device (if present) may include a set of one or more electrical communication contacts configured to read information from the machine readable data source via an electrical connection established between the set of one or more electrical communication contacts and the machine readable data source. Conveniently, the set of one or more electrical communication contacts of the reading device may be configured to provide the electrical connection by engaging with a set of one or more electrical communication contacts of the consumable 150, when the main body 120 and the consumable 150 are physically coupled together.

In some examples, the reading device (if present) may be configured to read information from the machine readable data source wirelessly, e.g. via electromagnetic waves or optically. Thus, for example, the machine readable data source included in the consumable 150 could be an RFID tag (in which case the reading device included in the main body 120 may be an RFID reader) or a visual data source such as a barcode (in which case the reading device included in the main body may be an optical reader, e.g. a barcode scanner). Various wireless technologies and protocols may be employed to allow the reading device to wirelessly read information from a machine readable data source included in or attached to the consumable 150, e.g. NFC, Bluetooth, Wi-Fi, as would be appreciated by a skilled person.

The reading device (if present) may be configured to write information associated with the consumable to the machine readable data source (e.g. wirelessly or non-wirelessly, via one of the mechanisms discussed above) in addition to being configured to read information associated with the consumable from the machine readable data source. In this case, the reading device may be referred to as a reading/writing device.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical supply contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reading device configured to read information associated with the consumable from the machine readable data source.

For example, the electrical interface 160 of the consumable 150 may include a set of one or more electrical communication contacts, which may allow a reading device of the main body to read information from a machine readable data source of the consumable, e.g. as discussed previously.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

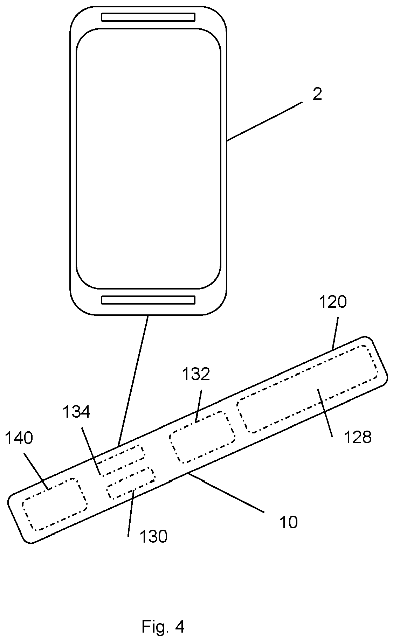

Referring to Figure 4, an exemplary embodiment is shown wherein the system comprises an external device 2 and a smoking substitute device 10. The devices 2, 10 can be as explained above, but specific features relating to the disablement of the smoking substitute device prior to an updated firmware being installed are herein further described.

The external device 2 is shown as suitably being a smart telephone operating an application. However, it will be appreciated that other devices such as tablet computers, smart watches or the like may be equally applicable. The external device 2 runs the application that can be used as a user interface between the user and the smoking substitute device. In order to establish communication between the external device and smoking substitute device, the smoking substitute device includes a communications interface and the external device is connected thereto. Whilst a wired connection would provide a suitable connection, it is envisaged that a more preferable connection would be a wireless connection as discussed above. Therefore, upon initial set up of the system, it will be appreciated that the application may be used to pair the external device with the smoking substitute device. For instance, the application may complete a Bluetooth pairing operation or another operation to establish the external device as a trusted device. With communication between the devices established, the external device can communicate with the smoking substitute device via the application and the smoking substitute device can communicate with the external device via the application by being controlled to transmit data via a communication interface component.

As shown in Figure 4, the body 120 of the smoking substitute device 10 therefore preferably house a wireless communication component such as short distance wireless communication module 134.

The body 120 also houses memory 132. The memory as described above is arranged to store firmware data that is used by a control unit 130 to perform the operational functions of the smoking substitute device as is known in the art. For instance, the control unit uses the firmware to control the communication unit to complete communication steps, to control power distribution to the components and to store updated firmware data in the memory.

A power source, such as a battery 128 is also housed in the body 120. The power source is configured to provide power to the various components of the smoking substitute device as is known in the art.

As shown in Figure 4, the smoking substitute device 10 includes an aerosol assembly component 140. The aerosol assembly component typically includes the components necessary to produce an aerosol. For instance, the aerosol assembly component might include a heating device 162. Suitably, the heating device might be a coil as herein described. In an additional embodiment, the heating device 162 is configured to be actuated by an additional component 168 such as a switch or an airflow sensor. Here, in use the smoking substitute device is configured to supply power to the heating device when the switch is activated or when the airflow sensor senses an inhale. In the exemplary embodiments, the control unit 130 controls the power source 128 to not supply power to the heating device 162 and / or the additional component 168. Consequently, the aerosol assembly component is disabled because the heating device is not provided with power, either directly or through the additional component. Alternatively, the control unit is configured to ignore commands requesting the heating devices activation. With no power provided to the heating device, the smoking substitute device is disabled from being used because no aerosol is produced even if the user attempts to do so by activating the switch for instance or by inhaling.

In one embodiment, the smoking substitute device includes a consumable 150 as herein described. The consumable couples with a coupling portion, for instance a coupling portion of the smoking substitute device's body. Typically, the coupling portion includes an electrical interface 136 for electrically connecting the consumable to the components in the body 120. For instance, as explained above, the electrical interface may be a pair of electrical contact pins. The power source 128 is configured to power the consumable through the electrical interface 136. Here, the smoking substitute device can additionally or alternatively be disabled by controlling the power source to prevent power from being supplied to the electrical interface.

In use, the external device receives an updated firmware that has been developed and published on the remote server. This updated firmware may, in addition to correcting generic errors which the developers are aware of, provide new features on the smoking substitute device. The updated firmware may be pushed to the external device actively or the external device may periodically poll the remote server to see if new firmware is available. Either as a push, or in response to a poll, the remote server 4 sends the updated firmware to the mobile device. The mobile device then receives the updated firmware. Here the mobile device may verify that the updated firmware is compatible with the smoking substitute device to which it is connected and may prompt a user of the mobile device asking for authorisation to update the firmware on the smoking substitute device.

Upon receiving the updated firmware, the external device automatically transmits a disable command to the connected smoking substitute device. Typically, as discussed above, the mobile device is configured to interact with the user, remote network and smoking substitute device via an application running in the external device. The application may trigger the disable command to be transmitted as soon as the updated firmware is received or after verifying that the updated firmware is compatible with the connected smoking substitute device. However, the disable command is forced on the smoking device as soon as a connection is established or re-established and without the application requiring an input from the user.

In this way, safety critical firmware updates can be pushed on the smoking substitute device with the device remaining disabled until the updated firmware is installed. Should the application be paired with a smoking substitute device but where a wireless connection is not available, the application may reattempt to send the disable command when a wireless connection is established or re-established.

The application may cause the external device to either push the updated firmware to the smoking substitute device without further user input, or the smoking device may be manipulated to pull the updated firmware from the external device periodically or the application running on the external device may provide for the updated firmware to be pushed to the connected smoking substitute device only after a further input command, such as from a user.

In exemplary embodiments, the updated firmware is transmitted from the remote server 4 to the smoking substitute device 10 via the mobile device 2. However, as described above, it is possible that the smoking substitute device 10 forms a connection to the remote server 4 without going via the mobile device 2. For example, if the smoking substitute device 10 included a WiFi® adapter or cellular network adapter.

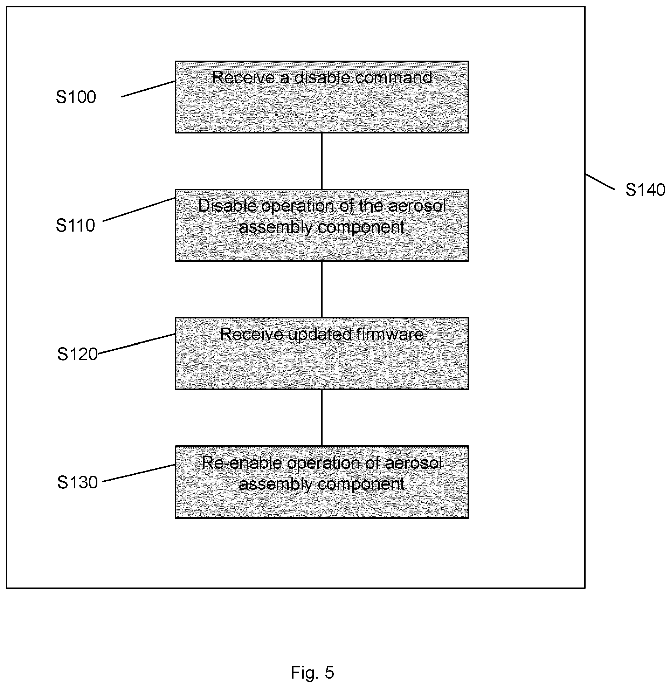

Referring to Figure 5 a method of managing the smoking substitute device comprises the step S100 of receiving a disable command. After receiving the disable command the control unit component 130 is configured to disable operation of the aerosol assembly component 140 at step S110. Subsequent to step S100, the smoking substitute device is configured to receive an updated firmware and to save the updated firmware to the memory 132 at step S120. After saving the updated firmware to the memory, the control unit is configured by the updated firmware to re-enable the aerosol assembly component at step S130. The steps complete a firmware update step S140.

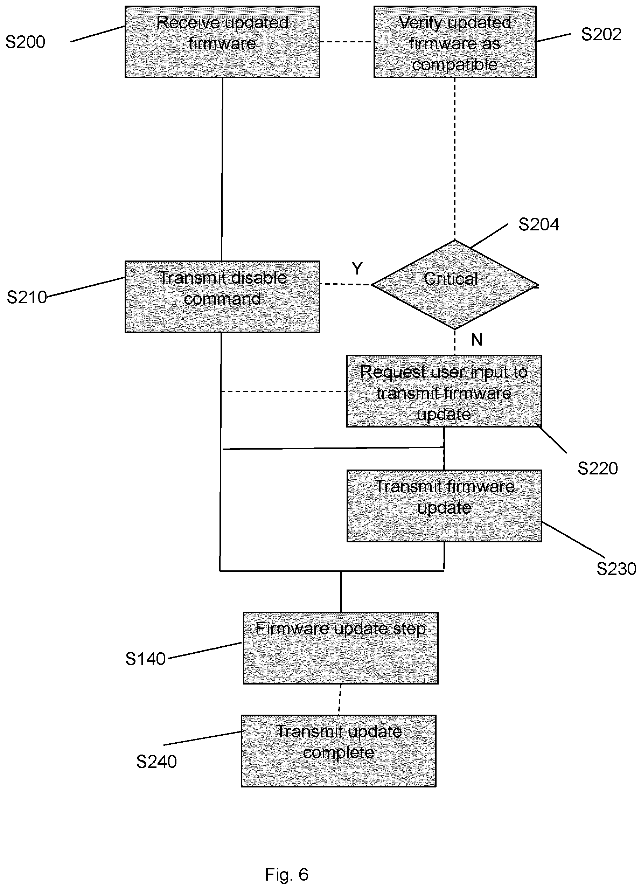

Figure 6 shows a method of managing a system including the smoking substitute device 10 and an external device 2. Here the method comprises the step S200 of receiving at the external device an updated firmware. Typically receiving the updated firmware at the external device will be controlled by an application running on the external device. Here the application may complete an optional verification step S202 to check that the updated firmware is compatible with the smoking substitute device the external device is connected to. Automatically upon receiving the updated firmware, the external device transmits a disable signal to the connected smoking substitute device at step S210. Therein the method completes the firmware update step S140.

In one exemplary embodiment, the application includes an optional step S220 of seeking a user input before pushing the updated firmware to the smoking substitute device. However, the optional step S220 occurs after the disable command step S210 has been transmitted. In a further exemplary embodiment, wherein the updated firmware includes a critical tag, the method optionally includes the step S204 of reading the updated firmware to check for a non-critical tag. If the firmware is marked as non-critical, the step S210 can be bypassed.

In one exemplary embodiment, at step S240, the control unit component can be configured to transmit a download complete signal back to the remote device once the download is complete and the aerosol assembly component re-enabled.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A smoking substitute device comprising:
a memory component storing firmware that is used to control operations of the smoking substitute device;
a communication interface component to receive data from an external device;
a control unit component that executes the firmware to control the memory and communication interface; and
an aerosol assembly component to produce an aerosol; wherein
the communication interface is configured to receive a disable command from the external device and upon receiving the disable command the control unit disables operation of the aerosol assembly component; and
the communication interface is configured to subsequently receive data comprising an updated firmware and the control is configured to continue to disable operation of the aerosol assembly component until the data comprising an updated firmware is stored in the memory.

2. The smoking substitute device of Claim 1, wherein the aerosol assembly component includes a heating unit and the control unit disables the aerosol assembly component by preventing power from being provided to the heating unit.

3. The smoking substitute device of Claim 1, wherein the aerosol assembly component includes a heating unit and an additional component to activate the heating unit and the control unit disables the aerosol assembly component by preventing power from being provided to the additional component.

4. The smoking substitute device of Claim 3, wherein the additional component is a switch.

5. The smoking substitute device of Claim 3, wherein the additional component is an airflow sensor.

6. The smoking substitute device of Claim 1, wherein the aerosol assembly component includes a consumable that couples with a coupling portion that includes an electrical interface for electrically connecting the consumable, wherein the control unit disables the aerosol assembly component by preventing power from being provided to the electrical interface.

7. The smoking substitute device of Claim 1, wherein the communication interface is a wireless interface.

8. A system including a smoking substitute device of Claim 1 and an external device, wherein the external device receives data comprising an updated firmware from a remote server and upon receiving the updated firmware, the external device transmits a disable command to the connected smoking substitute device and subsequently transmits the data comprising an updated firmware to the substitute smoking device.

9. A method of managing a smoking substitute device, the method comprising the steps of:
receiving a disable command;
disabling operation of an aerosol assembly component upon receiving the disable command;
receiving data corresponding to an updated firmware and storing the data in memory of the smoking substitute device; and
re-enabling operation of the aerosol assembly component after the data corresponding to the updated firmware is stored in the memory.

10. A method of managing a system comprising a smoking substitute device and an external device, wherein the method comprises the steps of:
receiving from a remote server an updated firmware;
after receiving the updated firmware transmitting a disable command to the smoking substitute device; and
after transmitting the disable command, transmitting data corresponding to the updated firmware to the smoking substitute device.

11. The method of Claim 10, wherein the method comprises the step of verifying the updated firmware is compatible with the smoking substitute device prior to transmitting the disable command.

12. The method of Claim 10, wherein the method comprises the step of seeking a user input command prior to transmitting the updated firmware.

13. The method of Claim 10 wherein the method includes a step of identifying the updated firmware as non-critical and transmitting the disable command only if the updated firmware is identified as critical.

14. A computer implemented method for controlling a smoking substitute device to execute the method of claim 9 or claim 10 or a computer-readable medium containing computer-readable instructions which, when executed by a processor, cause the processor to perform the method of claim 9 or claim 10.
